# EUROPÄISCHE PATENTSCHRIFT

(11) **EP 3 077 712 B1**
(45) Veröffentlichungstag und Bekanntmachung des Hinweises auf die Patenterteilung: **01.08.2018**
(21) Anmeldenummer: 14806610.3
(22) Anmeldetag: 02.12.2014
(51) Int. Cl.: F16K 31/06

(54) **MAGENTVENTIL**
MAGNETIC VALVE
SOUPAPE À SOLÉNOÏDE

(30) Priorität: 04.12.2013 DE 102013224898
(43) Veröffentlichungstag der Anmeldung: 12.10.2016
(73) Patentinhaber: Robert Bosch GmbH, 70442 Stuttgart (DE)
(72) Erfinder: DROLL, Katharina, 77815 Buehl (DE); SCHMID, Joerg, 77855 Achern (DE); REEB, Georg, 77815 Buehl Eisental (DE)
(86) Internationale Anmeldenummer: PCT/EP2014/076221
(87) Internationale Veröffentlichungsnummer: WO 2015/082456

(56) Entgegenhaltungen:
- EP-A1- 1 021 671
- EP-A2- 1 209 327
- US-A- 3 329 165
- US-A- 5 046 530
- US-A1- 2013 220 453

## Beschreibung

### Stand der Technik

Die Erfindung betrifft ein Magnetventil mit optimierter Entlüftung nach Gattung des unabhängigen Anspruchs. Es ist aus der DE 195 37 067 C1 bekannt, bei einem Magnetventil, das in einer Vorlaufleitung eines Heizungswärmetauschers angeordnet ist, unter Ausnutzung des Druckgefälles zwischen der Vorlaufleitung und der Rücklaufleitung den Ankerraum des Magnetventils zu durchströmen, um die Luftblasen aus dem Ankerraum zu entfernen und die damit verbundenen Nachteile zu vermeiden. Hierzu ist eine Entlüftungsleitung zwischen dem Ankerraum und der Rücklaufleitung vorgesehen, während über einen Ringspalt zwischen dem Anker und der Spule des Magnetventils Flüssigkeit von einer Vorlaufleitung in die Entlüftungsleitung strömt und verhindert, dass sich im Ankerraum Luftblasen ansammeln.

Es ist ferner aus der DE 34 16 465 A1 bei einem Magnetventil bekannt, einen Ankerraum über einen axialen Kanal in einem Ankerschaft mit einem Leitungsabschnitt zu verbinden, der auf der dem Ankerraum zugewandten Seite des Ventilglieds liegt. Durch die Pumpwirkung des Ankers während der Ventilbetätigung soll Luft aus dem Ankerraum verdrängt und Flüssigkeit angesaugt werden. Wegen der Kompressibilität der Luft findet allerdings nicht immer ein ausreichender Flüssigkeitsaustausch zwischen dem Ankerraum und dem Leitungsabschnitt statt und die Luft kann unter Umständen im oberen, ringförmigen Teil des Ankerraums eingeschlossen bleiben.

Aus der DE 198 09 047 A1 ist ein Magnetventil gemäß des Oberbegriffs des Anspruchs 1 bekannt, wobei eine Öffnung des axiale Schaft in einen stark durchströmten Kanal des Magnetventils ragt.

Aus der US 2013/220453 A1, EP 1 209 327 A2, EP 1 021 671 A1, US 5 046 530 A1 und US 3 329 165 sind verschiedene Ausgestaltungen von Magnetventilen bekannt.

### Offenbarung der Erfindung

Die Aufgabe der Erfindung besteht in der Reduzierung der Verunreinigung des Ankerraums bei gleichzeitiger Ermöglichung eines Durchflusses durch den Ankerraum.

Die Aufgabe wird gelöst durch einen erfindungsgemäßes Ventil gemäß dem Hauptanspruch.

Das erfindungsgemäße Magnetventil mit den Merkmalen des Hauptanspruchs hat gegenüber den im Stand der Technik bekannten Magnetventilen den Vorteil, dass der Durchfluss durch den Ankerraum des Magnetventils geringer ist, wodurch die Verschmutzungswahrscheinlichkeit aufgrund von Partikeln in der Flüssigkeit gesenkt ist. Weiter werden die Bewegungen des Ankers hydraulisch gedämpft, um ein abruptes Schließen und damit verbundene Druckstöße im Flüssigkeitssystem zu vermeiden. Auch werden Geräusche sowie Verschleiß verhindert, die entstehen, wenn das Ventilglied ungedämpft auf den Ventilsitz aufschlägt.

Vorteilhaft ist der dritte Kanal ein Nebenlaufkanal. Der Nebenlaufkanal wird im Gegensatz zu den anderen Kanälen nicht kontinuierlich durchflossen Durch die in den Unteransprüchen aufgeführten Maßnahmen ergeben sich vorteilhafte Weiterbildungen und Verbesserungen der im Hauptanspruch angegebenen Merkmale.

Das Magnetventil kann einfach in neue oder bestehende Systeme eingebunden werden. Hierzu müssen die einzelnen Kanäle jeweils mit einem Leitungsabschnitt, insbesondere der Heiz- und/oder Kühlanlage verbunden werden. Durch die Verbindung mit der Heiz oder Kühlanlage können die unterschiedlich temperierten Flüssigkeiten in dem Ventil gemischt werden. Durch die Mischung erfolgt eine Temperaturerhöhung oder Temperatursenkung der am Ventil ausgegebenen Flüssigkeit abhängig von dem Mischungsverhältnis. Somit ist das Magnetventil in vielen Einsatzbereichen, beispielsweise in einem Kühlkreislauf im Fahrzeug, einem Heiz oder Kühlsystem bei Gebäuden einsetzbar. Auch in Mischanlagen könnte das Magnetventil eingesetzt werden.

Vorteilhaft kann ein Nebenlaufkanal beispielsweise einen geringeren Durchfluss aufgrund eines geringeren Querschnitts haben..

Vorteilhaft kann der Nebenlaufkanal eine gegenüber dem ersten und dem zweiten Kanal andere Flüssigkeit oder eine Flüssigkeit mit einer anderen Temperatur enthalten. Das Magnetventil ermöglicht insbesondere ein Mischen der Flüssigkeiten aus dem Nebenlaufkanal und einem weiteren Kanal und umgekehrt. Eine Dossierung der Flüssigkeitszugabe aus dem Nebenlaufkanal kann beispielsweise durch einen getakteten Wechsel der Schaltstellungen erfolgen. Die Taktung erfolgt über PWM Ansteuerung des Magnetventils. Kanäle durch die Flüssigkeit in das Ventil fließen werden als Zulaufkanäle bezeichnet. Kanäle über die Flüssigkeiten aus dem Ventil fließen werden als Ablaufkanäle bezeichnet. Der Nebenlaufkanal ist vorteilhaft als Zulaufkanal ausgebildet. Ist der Nebenlaufkanal als Zulaufkanal ausgebildet, so wird der Ankerraum größtenteils von der Flüssigkeit des Nebenlaufkanals durchströmt.

Besonders vorteilhaft ist, dass der Ventilschaft auf der vom Ankerraum abgewandten Seite des Ventilglieds verlängert ist und ein zweites Ventilglied trägt. Das zweite Ventilglied stellt die Verbindung zwischen dem ersten Kanal und dem zweiten Kanal in einer zweiten Schaltstellung her. In einer ersten Schaltstellung unterbricht das zweite Ventilglied die Verbindung zwischen dem ersten und dem zweiten Kanal. Durch das zweite Ventilglied kann die Verbindung zwischen dem ersten und dem zweiten Kanal hergestellt oder gesperrt werden. Abhängig von der Schaltstellung ist eine Verbindung zwischen dem ersten Kanal und dem Nebenlaufkanal oder dem ersten Kanal und dem zweiten Kanal möglich. Es ist denkbar warme oder kalte Flüssigkeiten in einen Leitungsabschnitt einzuleiten.

Weiter ist vorteilhaft, wenn der Ventilschaft eine Öffnung, die eine Verbindung zwischen dem Nebenlaufkanal und dem axialen Kanal herstellt. Die Öffnung kann beispielsweise als Bohrung ausgeführt sein. Eine Öffnung ermöglicht eine definierten Flüssigkeitszulauf oder Flüssigkeitsablauf, bzw. einen definierten Flüssigkeitstransport über den axialen Kanal im Ventilschaft in den Ankerraum. Vorteilhaft kann der Ventilschaft auch eine Kerbe, ein Schlitz, eine Querbohrung oder eine andere Art von Öffnung aufweisen, die eine Verbindung zwischen dem Nebenlaufkanal und dem axialen Kanal herstellt. Abhängig von der Art der Öffnung kann die Stärke des Zulaufs oder Ablaufs definiert werden. Auch Verwirbelungen, die einen reinigenden Effekt des axialen Kanals zur Folge haben, können durch die Art der Öffnung erzeugt werden.

Weiter kann in vorteilhafter Weise eine Drosselung durch die Art der Öffnung, bzw. der Bohrung zwischen dem Nebenlaufkanal und dem axialen Kanal erreicht werden. Hierzu kann entweder der axiale Kanal oder die Öffnung eine Drosselstelle aufweisen oder als Drosselstelle ausgebildet sein. Durch die Veränderung der Art der Öffnung kann beispielswiese mit geringem Aufwand bei der Produktion eine Drosselstelle ausgebildet werden. Die Drosselstelle im axialen Kanal kann als Verengung, Einlegeteil, Klebe-, Schweiß- oder Lötpunkt ausgebildet sein. Auch eine Variation des Innendurchmessers des axialen Kanals kann eine Drosselung bewirken. Als Öffnung bietet sich beispielsweise eine Bohrung, eine Querbohrung, eine Ritze oder eine Kerbe an. Es ist aber auch ein Ansägen des Ventilschafts denkbar.

Damit sich die Flüssigkeit nicht unkontrolliert in dem Magnetventil verteilt, ist es vorteilhaft wenn eine Membrandichtung mit einer Dichtlippe an dem Ventilschaft auf der dem Ankerraum zugewandten Seite des Ventilglieds anliegt. Die Membrandichtung begrenzt den Durchfluß durch den Ankerraum und verhindert ein Leerlaufen des Ankerraums im Stillstand. Ein Leerlaufen des Ankerraums hat eine Füllung des Ankerraums mit Luft zur Folge. Dadurch würde die hydraulisch dämpfende Wirkung der Flüssigkeit im Ankerraum aufgehoben. Auch die Schmierung und Kühlung würde verschlechtert.

Ferner ist vorteilhaft, dass der erste Kanal ein Ablaufkanal ist. Somit kann zwischen zwei Zulaufkanälen gewählt werden, wobei der zweite Kanal und der Nebenlaufkanal jeweils ein Zulaufkanal ist. Denkbar ist auch, dass der erste Kanal ein Zulaufkanal ist und der zweite Kanal und der Nebenlaufkanal ein Ablaufkanal bilden. Hierbei könnte über das Magnetventil eingestellt werden, ob der Ablauf über den zweiten oder den Nebenlaufkanal erfolgen soll.

Vorteilhaft umfasst das Ventil zwei Schaltstellungen, wobei in einer ersten Schaltstellung der Nebenlaufkanal mit dem ersten Kanal und in einer zweiten Schaltstellung der erste Kanal mit dem zweiten Kanal verbunden ist. Eine Verwendung von zwei Schaltstellungen vereinfacht den Aufbau und die Ansteuerung des Ventils. Es werden keine Zwischenstellungen benötigt, die eine aufwendige Abfrage der aktuellen Position benötigen. Das Magnetventil kann beispielsweise durch die Kraft einer Feder die zweite Schaltstelllung und durch die Kraft eines Magnetfelds die erste Schaltstellung einnehmen und umgekehrt.

Eine mehrfache Absetzungs- bzw. Einstichschleifung des Ventilschafts ist bei der Herstellung aufwendig und daher kostenintensiv. Auch können sich in den Absetzungen oder Abstufungen Schmutzpartikel festsetzen. Aus diesem Grund ist eine besonders vorteilhafte Ausbildung, wenn der Ventilschaft durchgangsgeschliffen ist.

Vorzugsweise umfasst das erste Ventilglied ein ersten Ventilkegel und ein ersten Ventilsitz und das zweite Ventilglied ein zweiten Ventilkegel und ein zweiten Ventilsitz.

Weiter ist vorteilhaft, dass der Aufwand für die Herstellung des Magnetventils gesenkt wird, wenn der erste Ventilkegel, des ersten Ventilglieds und der zweite Ventilkegel, des zweiten Ventilglieds einteilig ausgeführt sind. Der einteilig ausgeführte Ventilkegel kann einfach montiert werden. Auch müssen keine Toleranzen zwischen dem ersten und dem zweiten Ventilkegel ausgeglichen werden. Die Montage des Magnetventils ist durch den einteilig ausgeführten Ventilkegel vereinfacht.

Des Weiteren hat sich gezeigt, dass eine Variation des Querschnitts zwischen den einzelnen Kanälen vorteilhaft ist. So ist insbesondere der Querschnitt des Nebenlaufkanals kleiner als der des ersten Kanals oder des zweiten Kanals.

### Beschreibung der Zeichnungen

Weitere Merkmale der Erfindung ergeben sich aus den Zeichnungen und sind in der nachfolgenden Beschreibung näher erläutert. Es zeigen:
- Figur 1: ein Magnetventil gemäß des Stands der Technik,
- Figur 2: eine erfindungsgemäße Verbindung zwischen Ankerraum und Nebenlaufkanal; die zwei unterschiedlichen Ventilkegel sind nicht Teil der Erfindung; und
- Figur 3: ein erfindungsgemäßes Magnetventil mit einem einteilig ausgeführten Ventilkegel.

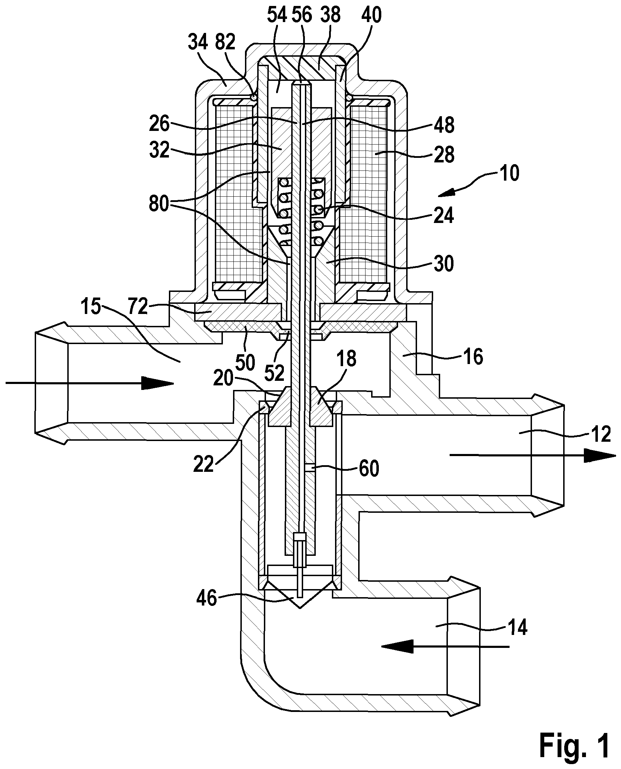

Das Magnetventil 10 nach Figur 1 ist beispielsweise zwischen einer Brennkraftmaschine und einem Heizungswärmetauscher in einer Vorlaufleitung angeordnet. Es besitzt einen Zulaufkanal 14, der mit der Brennkraftmaschine verbunden ist, einen Ablaufkanal 12, der insbesondere mit dem Heizungswärmetauscher verbunden ist und einen Nebenlaufkanal 15, der als Anschlusskanal dient. Zwischen dem Ablaufkanal 12 und dem Nebenlaufkanal 15 ist ein erstes Ventilglied 18 vorgesehen, das über einen ersten Ventilkegel 20 mit einem ersten Ventilsitz 22 in einen Ventilgehäuse 16 zusammenwirkt und in einer ersten Schaltstellung die Verbindung zwischen dem Nebenlaufkanal 15 und dem Ablaufkanal 12 herstellt und in einer zweiten Schaltstellung, der Schließstellung, sperrt. Das Ventilglied 18 umfasst ein Ventilsitz 22 in einem Ventilgehäuse 16 und einen Ventilkegel 20. Zwischen den Kanälen 12 und 14 ist ein zweites Ventilglied 46 vorgesehen, das über einen zweiten Ventilkegel 21 mit einem zweiten Ventilsitz 23 in dem Ventilgehäuse 16 zusammenwirkt. In einer ersten Schaltstellung sperrt das Ventilglied 46 die Verbindung zwischen dem Zulaufkanal 14 und dem Ablaufkanal 12. In einer zweiten Schaltstellung stellt das zweite Ventilglied die Verbindung her.

Weiter weist das Magnetventil 10 einen Ventilschaft 26 auf. Mit dem Ventilschaft 26 ist das erste Ventilglied 18, das zweite Ventilglied 46 und der Anker 32, insbesondere formschlüssig und kraftschlüssig verbunden. Der Anker 32 wirkt mit einer Magnetspule 28 zusammen. Der Anker 32 ist in einem Ankerraum 54 durch eine Führungsbüchse 40 axial verschiebbar geführt. Eine Ventilfeder 24 hält das Ventilglied 18 in geschlossener Stellung, solange die Magnetspule 28 nicht von einem Strom durchflossen wird, insbesondere magnetisch erregt ist. Wenn die Magnetspule 28 bestromt wird, zieht ein Magnetkern 30, der mit der Platte 72, dem Magnettopf 34 und der Führungsbüchse 40 den Magnetkreis bildet, den Anker 32 entgegen der Kraft der Ventilfeder 24 an. Das Ventilglied 18 öffnet die Verbindung zwischen dem Nebenlaufkanal 15 und dem Ablaufkanal 12. Zwischen dem Anker 32 und der Führungsbüchse 40 sowie dem Ventilschaft 26 und dem Magnetkern 30 sind für die Bewegung des Ankers 32 und des Ventilschafts 26 Bewegungsspalte 80 vorgesehen, die zumindest zeitweise eine Verbindung zwischen dem Ankerraum 54 und dem Nebenlaufkanal 15 bilden. Der Ankerraum 54 ist ferner über einen axialen Kanal 48 mit dem Kanal 12 verbunden.

Aufgrund des Druckgefälles zwischen dem Nebenlaufkanal 15 und dem Ablaufkanal 12, insbesondere in der Schließstellung des Ventilglied 18, strömt Flüssigkeit über den axialen Kanal 48 und die Bewegungsspalte 80 durch den Ankerraum 54. Die strömende Flüssigkeit entfernt Luft- bzw. Gasansammlungen im Ankerraum 54. Der axiale Kanal 48 ist über eine Querbohrung 60 mit dem Zulaufkanal 12 verbunden. Aufgrund des Druckgefälles zwischen der Querbohrung 60 und dem Nebenlaufkanal 15 wird der Ankerraum 54 in Richtung des Nebenlaufkanals 15 durchströmt.

Der Durchsatz an Flüssigkeiten durch den Ankerraum 54 kann durch eine definierte Drosselstelle im axialen Kanal 48 oder in einer Querbohrung 60 bestimmt werden. Die definierte Drosselstelle vermeidet Ablagerungen von Schmutz und/oder begrenzt die Leckagemenge bei geschlossenem Ventilglied 18 . Allerdings kann auch der axial Kanal 48 oder die Querbohrung 60 selbst zur Begrenzung des Durchflusses so dimensioniert werden, dass sie als Drosselstellen wirken.

Trotz definierter Drosselstelle in dem axialen Kanal 48 oder in der Querbohrung 60 kann die stetige Durchströmung des Ankerraums 54 zu Ablagerungen von Schmutz im Ankerraum 54 führen. Der Zulaufkanal 14 und der Ablaufkanal 12 bilden beide Hauptkanäle, die gegenüber dem Nebenlaufkanal 15 stärker durchströmt werden. Durch die Verbindung des Ankerraums 54 mit einem der beiden Hauptkanäle 12, 14 wird der Ankerraum 54 durchströmt. Damit besteht eine erhöhte Verschmutzungsgefahr des Ankerraums 54.

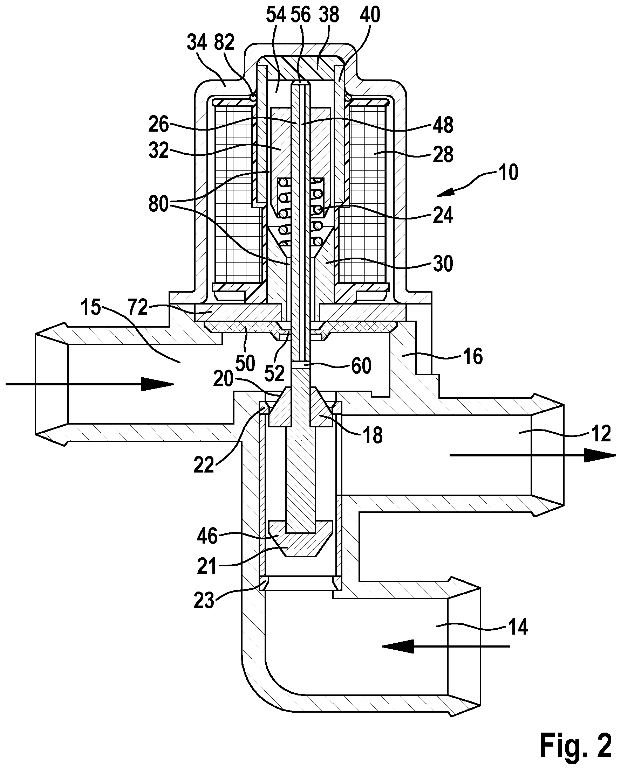

Figur 2 zeigt ein Ausführungsbeispiel für ein erfindungsgemäßes Magnetventil 10, betreffend die Verbindung zwischen Ankerraum und Nebenlaufkanal. In dem Magnetventil 10 ist der Ankerraum 54 über zwei Verbindungen mit dem Nebenlaufkanal 15 verbunden. Die erste Verbindung wird über den axialen Kanal 48 und eine Öffnung 60 hergestellt. Die zweite Verbindung wird über den Bewegungsspalt 80 hergestellt. Die Öffnung 60 kann dabei als Spalt, Querbohrung, Kerbe oder Bohrung ausgeführt sein.

Wird die Verbindung zwischen dem Nebenlaufkanal 15 und dem ersten Kanal 12 hergestellt, dann strömt ein kleiner Anteil der Flüssigkeit durch die Öffnung 60 und den axialen Kanal 48 in den Ankerraum 54. Vom Ankerraum 54 aus strömt die Flüssigkeit durch den Bewegungsspalt zurück in den Nebenlaufkanal 15. Die Öffnung 60, der axiale Spalt 48, der Ankerraum 54, der Bewegungsspalt 80 und der Nebenlaufkanal 15 bilden einen Kreislauf. Der Flüssigkeitskreislauf hat den Vorteil das Luftbläschen aus dem Ankerraum gedrückt, insbesondere gespült werden. Abhängig von der Art und Form der Öffnung 60 und des axialen Kanals 48 können Drosselwirkungen erreicht werden.

Weiter wird durch die Bewegung des Ankers 32 und damit die Verdrängung der Flüssigkeit im Ankerraum 54 eine Pumpwirkung erzeugt. Durch die Pumpwirkung werden Luftbläschen aus dem Ankerraum 54 gedrückt.

Durch die Verbindung des Ankerraums 54 mit dem Nebenlaufkanal 15 über den axialen Kanal 48 und den Bewegungsspalte 80 erfolgt ein Durchfließen des Ankerraums 54 nur in der ersten Schaltstellung, bzw. bei Verbindung des Nebenlaufkanals 15 mit dem ersten Kanal 12. Damit wird der Ankerraum 54 nicht stetig durchflossen. Das hat eine Senkung der Verschmutzungswahrscheinlichkeit zur Folge. Die Anforderung an die Reinheit der Flüssigkeit sind bei einem erfindungsgemäßen Magnetventil 10 geringer als bei Magnetventilen 10, die im Stand der Technik bekannt sind.

Durch die Flüssigkeit im Bewegungsspalt 80 werden die angrenzenden Bauteile wie Magnetkern 20, Anker 32, Führungsbüchse 40 und Ventilschaft 26 gekühlt und geschmiert.

Die Magnetspule 28 befindet sich in einem Magnettopf 34, der auf einem Ventilgehäuse 16 befestigt ist.

Weiter wird ein Leerlaufen des Ankerraums 54, über den Bewegungsspalte 80, durch eine Membrandichtung 50 mit einer Dichtlippe 52 verhindert. Die Membrandichtung 50 und die Dichtlippe 52 muss jedoch ein Flüssigkeitsstrom zulassen, wenn der Nebenlaufkanal 15 mit dem ersten Kanal 12 verbunden ist. Die Membrandichtung 50 und die Dichtlippe 52 haben eine druckabhängige Dichtwirkung.

Durch den Aufbau des Magnetventils 10 und die Anordnung der Öffnung 60 im Nebenlaufkanal 15 können die Art, also ob es sich um einen Zulaufkanal oder einen Ablaufkanal handelt, abhängig vom Anwendungsgebiet für den ersten Kanal 12, den zweiten Kanal 14 und den Nebenlaufkanal 15 gewählt werden. Damit ist das Magnetventils 10 gegenüber den im Stand der Technik bekannten Magnetventilen 10 flexibler einsetzbar. In Figur 2 ist beispielhaft der Nebenlaufkanal 15 und der zweite Kanal 14 als Zulaufkanal ausgeführt. Der erste Kanal 12 ist als Ablaufkanal ausgeführt. Es ist aber auch möglich den ersten Kanal 12 als Zulaufkanal und den zweiten Kanal 14 und den Nebenlaufkanal 15 als Ablaufkanal auszuführen.

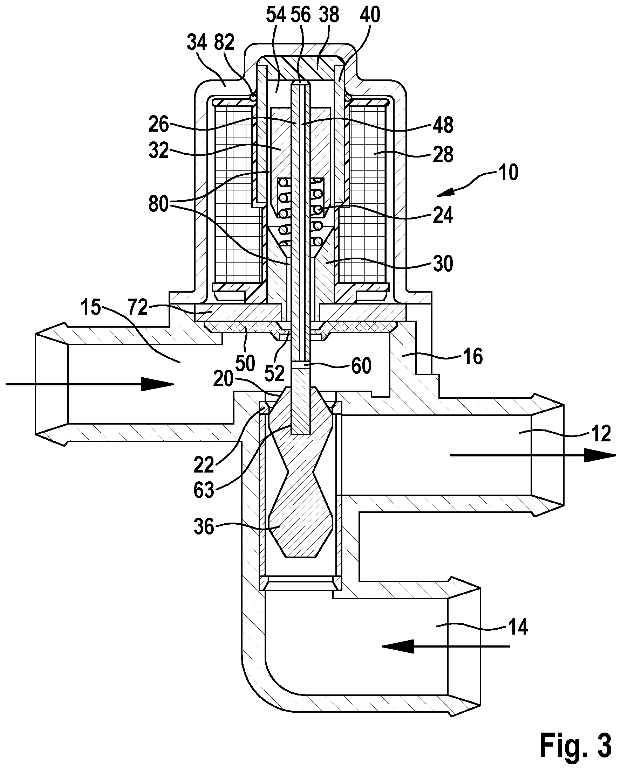

Figur 3 zeigt ein erfindungsgemäßes Magnetventil mit einem einteilig ausgeführten Ventilkegel 36. In dem Ausführungsbeispiel ist der erste Ventilkegel 20, des ersten Ventilglieds 18 mit dem zweiten Ventilkegel 21, des zweiten Ventilglied 46 einteilig ausgeführt. Der einteilige Ventilkegel 36 umfasst eine Ventilschaftaufnahme 63 in die der Ventilschaft 26 eingeschoben wird. Der Ventilschaft 26 ist einteilig, insbesondere durchgangsgeschliffen und damit einfach herstellbar ausgeführt. Der einteilige Ventilkegel 36 wird durch Schweißen, Pressen, Löten, Kleben mit dem Ventilschaft 26 verbunden. Der Ventilschaft 26 kann jedoch auch durch einen Formschluss oder Reibschluss in der Ventilschaftaufnahme 63 mit dem einteiligen Ventilkegel 36 drehfest und lagefest verbunden werden. Die Verbindung zwischen Ankerraum 54 und Nebenlaufkanal 15 ist, gemäß der Erfindung, wie in Figur 2 angezeigt. Die Erfindung ist somit für eine Vielzahl von Ventilvarianten und Ventilanordnungen anwendbar, ohne dass aufwendige Anpassungen erforderlich sind.

Gemäß einem weiteren Ausführungsform weist das Magnetventil 10 einen Anschlag 38 auf. Der Anschlag 38 , an dem der Ventilschaft 26 in der ersten Schaltstellung des Magnetventils 10 anliegt, verschließt die Führungsbüchse 40, bzw. den Ankerraum 54 stirnseitig. Ein Querkanal 56 am ankerraumseitigen Ende des Ventilschafts 26 stellt die Verbindung auch dann sicher, wenn der Ventilschaft 26 in geöffneter Stellung an dem Anschlag 38 anliegt. Der Anschlag 38 wird zweckmäßigerweise aus einem dämpfenden Kunststoffmaterial hergestellt.

## Patentansprüche

1. Magnetventil (10), insbesondere für eine flüssigkeitsgeregelte Heiz- und/oder Kühlanlage, mit einem mindestens drei Kanäle (12, 14, 15), die jeweils als Zulauf- oder Ablaufkanal ausgeführt sind, aufweisenden Ventilgehäuse (16) und einem elektromagnetisch geschalteten ersten Ventilglied (18), das zusammen mit einem Anker (32) auf einem einteiligen Ventilschaft (26) befestigt ist und die Verbindung zwischen dem ersten Kanal (12) und dem dritten Kanal (15) in einer ersten Schaltstellung herstellt und in einer zweiten Schaltstellung sperrt, wobei der Ventilschaft (26) mit dem Anker (32) in einen Ankerraum (54) taucht, der über eine Bewegungsspalte (80) und über einen axialen Kanal (48) im Ventilschaft (26) mindestens zeitweise von Flüssigkeit durchströmt ist, wobei zwischen dem ersten Kanal (12) und dem zweiten Kanal (14) ein zweites Ventilglied (46) vorgesehen ist, das über einen zweiten Ventilkegel (21) mit einem zweiten Ventilsitz (23) in dem Ventilgehäuse (16) zusammenwirkt, wobei das zweite Ventilglied (46) die Verbindung zwischen dem ersten Kanal (12) und dem zweiten Kanal (14) in der zweiten Schaltstellung herstellt und in der ersten Schaltstellung sperrt, und wobei das erste Ventilglied (18) über einen ersten Ventilkegel (20) mit einem ersten Ventilsitz (22) zusammenwirkt, **dadurch gekennzeichnet, dass**
der Ankerraum (54) über die Bewegungsspalte (80) und über den axialen Kanal (48) mit dem dritten Kanal (15) auf der dem Ankerraum (54) zugewandten Seite des erstes Ventilglieds (18) verbunden ist, wobei der dritte Kanal (15) als Nebenlaufkanal (15) ausgebildet ist,
wobei der erste Ventilkegel (20) und der zweite Ventilkegel (21) einteilig ausgeführt sind, wobei der einteilige Ventilkegel (36) eine Ventilschaftaufnahme (63) umfasst, und wobei in die Ventilschaftaufnahme (63) der einteilige Ventilschaft (26) eingeschoben ist.

2. Magnetventil (10) nach Anspruch 1, **dadurch gekennzeichnet, dass** jeder der Kanäle (12, 14, 15) jeweils mit einem Leitungsabschnitt, insbesondere der Heiz- und/oder Kühlanlage verbunden ist.

3. Magnetventil (10) nach Anspruch 1, **dadurch gekennzeichnet, dass** der dritte Kanal (15) nicht kontinuierlich durchflossen wird und als Zulaufkanal ausgebildet ist.

4. Magnetventil (10) nach einem der vorhergehenden Ansprüche, **dadurch gekennzeichnet, dass** der Ventilschaft (26) auf der vom Ankerraum (54) abgewandten Seite des Ventilglieds (18) verlängert ist und ein zweites Ventilglied (46) trägt, dass die Verbindung zwischen dem ersten Kanal (12) und dem zweiten Kanal (14) in der zweiten Schaltstellung herstellt und in der ersten Schaltstellung sperrt.

5. Magnetventil (10) nach einem der vorhergehenden Ansprüche, **dadurch gekennzeichnet, dass** der Ventilschaft eine Öffnung (60), insbesondere Bohrung aufweist, die eine Verbindung zwischen dem Nebenlaufkanal (15) und dem axialen Kanal (48) herstellt.

6. Magnetventil (10) nach einem der vorhergehenden Ansprüche, **dadurch gekennzeichnet, dass** der axiale Kanal (48) oder die Öffnung (60), insbesondere Querbohrung eine Drosselstelle aufweist oder als Drosselstelle ausgebildet ist.

7. Magnetventil (10) nach einem der vorhergehenden Ansprüche, **dadurch gekennzeichnet, dass** eine Membrandichtung (50) mit einer Dichtlippe (52) an dem Ventilschaft (26) auf der dem Ankerraum (54) zugewandten Seite des Nebenlaufkanals (15) anliegt, die den Durchfluß durch den Ankerraum (54) begrenzt und ein Leerlaufen des Ankerraums (54) im Stillstand verhindert.

8. Magnetventil (10) nach einem der vorhergehenden Ansprüche, **dadurch gekennzeichnet, dass** der erste Kanal (12) ein Ablaufkanal ist und der zweite Kanal (14) ein Zulaufkanal ist.

9. Magnetventil (10) nach einem der Ansprüche 3 bis 8, **dadurch gekennzeichnet, dass** in einer ersten Schaltstellung der Nebenlaufkanal (15) mit dem ersten Kanal (12) und in einer zweiten Schaltstellung der erste Kanal (12) mit dem zweiten Kanal (14) verbunden ist.

10. Magnetventil (10) nach einem der vorhergehenden Ansprüche, **dadurch gekennzeichnet, dass** der Ventilschaft (26) durchgangsgeschliffen ist.

11. Magnetventil (10) nach einem der vorhergehenden Ansprüche, **dadurch gekennzeichnet, dass** der Querschnitt des Nebenlaufkanals (15) kleiner als der des ersten Kanals (12) oder der des zweiten Kanals (14) ist.

## Claims

1. Solenoid valve (10), in particular for a liquid-controlled heating and/or cooling system, having a valve housing (16), which has at least three channels (12, 14, 15) which are formed in each case as an inflow or outflow channel, and having an electromagnetically switched first valve element (18), which is fastened together with an armature (32) on a unipartite valve shank (26) and which, in a first switching position, produces the connection between the first channel (12) and the third channel (15) and, in a second switching position, blocks said connection, wherein the valve shank (26) protrudes with the armature (32) into an armature chamber (54) which is at least intermittently flowed through by liquid via a movement gap (80) and via an axial channel (48) in the valve shank (26), wherein, between the first channel (12) and the second channel (14), there is provided a second valve element (46) which interacts by means of a second valve cone (21) with a second valve seat (23) in the valve housing (16), wherein the second valve element (46), in the second switching position, produces the connection between the first channel (12) and the second channel (14) and, in the first switching position, blocks said connection, and wherein the first valve element (18) interacts by means of a first valve cone (20) with a first valve seat (22),
**characterized in that**
the armature chamber (54) is connected via the movement gap (80) and via the axial channel (48) to the third channel (15) on that side of the first valve element (18) which faces toward the armature chamber (54), wherein the third channel (15) is formed as a tributary channel (15), wherein the first valve cone (20) and the second valve cone (21) are of unipartite form, wherein the unipartite valve cone (36) comprises a valve shank receptacle (63), and wherein the unipartite valve shank (26) is inserted into the valve shank receptacle (63).

2. Solenoid valve (10) according to Claim 1, **characterized in that** each of the channels (12, 14, 15) is connected in each case to a line section, in particular of the heating and/or cooling system.

3. Solenoid valve (10) according to Claim 1, **characterized in that** the third channel (15) is not flowed through continuously, and is formed as an inflow channel.

4. Solenoid valve (10) according to one of the preceding claims, **characterized in that**, on that side of the valve element (18) which is averted from the armature chamber (54), the valve shank (26) is elongated and bears a second valve element (46) which, in the second switching position, produces the connection between the first channel (12) and the second channel (14) and, in the first switching position, blocks said connection.

5. Solenoid valve (10) according to one of the preceding claims, **characterized in that** the valve shank has an opening (60), in particular bore, which produces a connection between the tributary channel (15) and the axial channel (48).

6. Solenoid valve (10) according to one of the preceding claims, **characterized in that** the axial channel (48) or the opening (60), in particular transverse bore, has a throttle point or is formed as a throttle point.

7. Solenoid valve (10) according to one of the preceding claims, **characterized in that** a diaphragm seal (50) bears with a sealing lip (52) against the valve shank (26) on that side of the tributary channel (15) which faces toward the armature chamber (54), which sealing lip limits the throughflow through the armature chamber (54) and prevents the armature chamber (54) from running dry in the standstill state.

8. Solenoid valve (10) according to one of the preceding claims, **characterized in that** the first channel (12) is an outflow channel and the second channel (14) is an inflow channel.

9. Solenoid valve (10) according to one of Claims 3 to 8, **characterized in that**, in a first switching position, the tributary channel (15) is connected to the first channel (12), and in a second switching position, the first channel (12) is connected to the second channel (14).

10. Solenoid valve (10) according to one of the preceding claims, **characterized in that** the valve shank (26) is ground by throughfeed grinding.

11. Solenoid valve (10) according to one of the preceding claims, **characterized in that** the cross section of the tributary channel (15) is smaller than that of the first channel (12) or of the second channel (14).

## Revendications

1. Soupape à solénoïde (10), en particulier pour une installation de chauffage et/ou de refroidissement à régulation liquide, comprenant un boîtier de soupape (16) présentant au moins trois conduits qui sont à chaque fois réalisés sous forme de conduit d'alimentation ou de sortie (12, 14, 15), et un premier organe de soupape (18) commuté de manière électromagnétique, qui est fixé conjointement avec un induit (32) sur une tige de soupape d'une seule pièce (26) et qui établit la connexion entre le premier conduit (12) et le troisième conduit (15) dans une première position de commutation et qui bloque cette connexion dans une deuxième position de commutation, la tige de soupape (26) plongeant avec l'induit (32) dans un espace d'induit (54) qui est parcouru au moins temporairement par du liquide par le biais d'une fente de déplacement (80) et d'un conduit axial (48) dans la tige de soupape (26), un deuxième organe de soupape (46) étant prévu entre le premier conduit (12) et le deuxième conduit (14), lequel coopère par le biais d'un deuxième cône de soupape (21) avec un deuxième siège de soupape (23) dans le boîtier de soupape (16), le deuxième organe de soupape (46) établissant la connexion entre le premier conduit (12) et le deuxième conduit (14) dans la deuxième position de commutation et bloquant cette connexion dans la première position de commutation, et le premier organe de soupape (18) coopérant par le biais d'un premier cône de soupape (20) avec un premier siège de soupape (22), **caractérisée en ce que**
l'espace d'induit (54) est connecté par le biais de la fente de déplacement (80) et par le biais du conduit axial (48) au troisième conduit (15) du côté du premier organe de soupape (18) tourné vers l'espace d'induit (54), le troisième conduit (15) étant réalisé sous forme de conduit d'écoulement auxiliaire (15), le premier cône de soupape (20) et le deuxième cône de soupape (21) étant réalisés d'une seule pièce, le cône de soupape d'une seule pièce (36) comprenant un logement de tige de soupape (63), et la tige de soupape d'une seule pièce (26) étant enfoncée dans le logement de tige de soupape (63) .

2. Soupape à solénoïde (10) selon la revendication 1, **caractérisée en ce que** chacun des conduits (12, 14, 15) est connecté à chaque fois à une portion de conduite, en particulier de l'installation de chauffage et/ou de refroidissement.

3. Soupape à solénoïde (10) selon la revendication 1, **caractérisée en ce que** le troisième conduit (15) n'est pas parcouru de manière continue et est réalisé sous forme de conduit d'alimentation.

4. Soupape à solénoïde (10) selon l'une quelconque des revendications précédentes, **caractérisée en ce que** la tige de soupape (26) est prolongée du côté de l'organe de soupape (18) opposé à l'espace d'induit (54) et porte un deuxième organe de soupape (46) qui établit la connexion entre le premier conduit (12) et le deuxième conduit (14) dans la deuxième position de commutation et qui bloque cette connexion dans la première position de commutation.

5. Soupape à solénoïde (10) selon l'une quelconque des revendications précédentes, **caractérisée en ce que** la tige de soupape présente une ouverture (60), en particulier un alésage, qui établit une connexion entre le conduit d'écoulement auxiliaire (15) et le conduit axial (48) .

6. Soupape à solénoïde (10) selon l'une quelconque des revendications précédentes, **caractérisée en ce que** le conduit axial (48) ou l'ouverture (60), en particulier l'alésage transversal, présente un étranglement ou est réalisé sous forme d'étranglement.

7. Soupape à solénoïde (10) selon l'une quelconque des revendications précédentes, **caractérisée en ce qu'**un joint d'étanchéité à membrane (50) s'applique avec une lèvre d'étanchéité (52) contre la tige de soupape (26) du côté du canal d'écoulement auxiliaire (15) tourné vers l'espace d'induit (54), qui limite l'écoulement à travers l'espace d'induit (54) et qui empêche que l'espace d'induit (54) ne se vide complètement à l'arrêt.

8. Soupape à solénoïde (10) selon l'une quelconque des revendications précédentes, **caractérisée en ce que** le premier conduit (12) est un conduit d'écoulement et le deuxième conduit (14) est un conduit d'alimentation.

9. Soupape à solénoïde (10) selon l'une quelconque des revendications 3 à 8, **caractérisée en ce que** dans une première position de commutation, le conduit d'écoulement auxiliaire (15) est connecté au premier conduit (12) et dans une deuxième position de commutation le premier conduit (12) est connecté au deuxième conduit (14).

10. Soupape à solénoïde (10) selon l'une quelconque des revendications précédentes, **caractérisée en ce que** la tige de soupape (26) est rectifiée en passe continue.

11. Soupape à solénoïde (10) selon l'une quelconque des revendications précédentes, **caractérisée en ce que** la section transversale du conduit d'écoulement auxiliaire (15) est inférieure à celle du premier conduit (12) ou à celle du deuxième conduit (14).
